# EUROPEAN PATENT SPECIFICATION

(11) **EP 0 755 298 B1**
(45) Date of publication and mention of the grant of the patent: **10.03.1999**
(21) Application number: 95907931.0
(22) Date of filing: 10.02.1995
(51) Int. Cl.: B01D 53/08, B01D 53/86, B01J 8/12

(54) **FLUE GAS PURIFICATION APPARATUS**
ABGASREINIGUNGSVORRICHTUNG
APPAREIL D'EPURATION DE GAZ DE COMBUSTION

(43) Date of publication of application: 29.01.1997
(73) Proprietor: Kovinska Industrija Vransko, 63305 Vransko (SI)
(72) Inventor: KRECA, Ivo, 63305 Vransko (SI); KUCAN, Ladislav, 69253 Apace (SI); ZERJAL, Emil, 62000 Maribor (SI)
(74) Representative: Wolff, Francis Paul
(86) International application number: SI9500001
(87) International publication number: WO9624432

(56) References cited:
- EP-A- 0 230 058
- EP-A- 0 376 356
- EP-A- 0 399 416
- EP-A- 0 577 118
- WO-A-89/08498
- WO-A-92/21429
- DE-C- 4 030 896
- DE-U- 9 014 347
- US-A- 5 332 562

## Description

The invention relates to apparatus for cleaning flue gas exiting from various industrial installations emitting gas containing particulate impurities, such as heavy metal aerosols; gaseous organic impurities, such as low-volatility organic compounds, polychlorinated dibenzodioxins (PCDD), polychlorinated dibenzofurans (PCDF); gaseous inorganic and acidifying impurities, e.g. HF, HCl, SO2, SO3, nitrogen oxides; and gaseous trace elements, such as heavy metals and compounds thereof.

The said installations comprise of
- waste incinerators;
- furnaces utilizing coal, oil, and gas;
- foundries and other metal forming facilities;
- furnaces burning flue gas contaminated by organic pollutants and/or odors;
- cement and/or ceramic kilns.

DE 21 60 400 claims apparatus for desulphurization of flue gas using the fluidized bed consisting of active charcoal and coke through which the flue gas are led perpendicularly to the main direction of the fluidized bed. The lowest part of the reactor is showed to form a downward oriented funnel. The side walls through which the gas enters the reactor are shown to be perforated although no type of perforation is claimed. The ideas of fluidized bed, cross inlet flow of impure gas, and active charcoal and/or coke particles contained within the bed will be used in the present invention.

DE 26 26 939 claims the regeneration of the adsorbents comprising the fluidized bed by first leading the adsorbents through the outer portion of flue purification apparatus and then reinserting the adsorbents through the central portion of the apparatus. Thus, this invention has outlined layered approach, i.e. the idea of flue gas being cleaned in stages by passing through two adjacent fluidized beds consisting of same material.

DE 32 28 984 describes, but not claims, the gas outlets from the upper portion of the reactor from within the fluidized bed. It claims the idea of protecting these outlets by two connected V-forming shields whereas the upper shields are without perforations and lower shields are made of perforated sheets. This idea is further explored in DE 35 23 417 whose claims pertain mainly to the forms of outlets which split the fluidized bed into several streams.

DE 38 17 686 introduces, without claiming, the idea of perforated walls where the perforations assume the general shape of the louvers if observed from the cross-section. This idea is further explored in EP 0 399 416 and later in DE 40 40 246 which in addition describes, but not claims, the idea of cross flow inlets and countercurrent flow outlets to and from fluidized bed, respectively. It, however, claims the angle α obtained by interconnecting the middle points of the louvers whereby said angle forms the funnel-shape like outlet for the fluidized bed.

EP-A-0376356 describes a process and apparatus for adsorbing constituents from a waste gas by feeding the waste gas through at least one reaction chamber filled with lumpy or granular adsorbent, and through at least one adsorption layer. The adsorbent is introduced into the reaction chamber and discharged therefrom through several separate feed and discharge hoppers in a grid-like distribution. The waste gas is guided in part from the side transversely to the adsorption layer and in part vertically through the reaction chamber by introducing the waste gas between the separate feed hoppers from above to flow downward through an exposed upper surface of the adsorbent in such a manner that the adsorbent in all zones of the reaction chamber participates practically uniformly in the adsorption.

In one embodiment of the invention described in EP-A-0376356, an inner annular reaction chamber nestles inside an outer annular reaction chamber. A partition separates the two chambers, and an annular space is provided between each chamber and the partition, with a further annular space between the outer chamber and the outer wall of the apparatus, and a cylindrical space inside the inner chamber.

Each annular chamber has inner and outer walls, each formed with downwardly directed louvers. The two annular chambers can be filled with beds of different adsorbents, each being loaded in a grid-like manner. A gas to be purified is passed into the apparatus, into the space between the partition and the inner wall of the outer bed, passes outwards through the outer bed into the annular space between the outer bed and the outer wall of the apparatus. The gas then passes downwards below both beds and into the inner cylindrical space. It then passes outwards through the inner bed into the annular space between the inner bed and the partition, and then passes upwards out of the apparatus.

Technical problems which arise through the use of state-of-the art are:
- if solely the cross flow of the flue gas is used this prevents the mixing of said gas with adsorbent and causing that the gas entering on the bottom of the perforated area always reacts with already partly reacted charcoal and/or coke while the gas entering on the top of the perforated are reacts with the fresh charge; This means that the gas will not be purified to desired degree but does provide for efficient use of the adsorbent charcoal;
- if solely vertical flow of flue gas is used the countercurrent approach precludes the use of several layers of fluidized bed unless the adsorbents are introduced twice in succession, which is costly and fouling prone solution;
- if simply perforated wall is used as an inlet to the fluidized bed the fouling may occur; furthermore, the momentum of incoming gas is mainly horizontal which causes the gas to prematurely turn upward and the efficiency of the adsorbent fluidized bed is not as good as desired;
- if louvers are used to introduce the flue gas into fluidized bed the fouling will occur unless the angle of the louver is large enough to prevent fouling;
- if the whole body of fluidized bed is moving with the same speed the desired purification of gas is usually not achieved; in addition, since the pollutants may excrete from the gas and clump with the particles forming the fluidized bed the fouling may occur thus increasing pressure drop through the apparatus.

To overcome problems, some of which are presented in the previous section, we propose the apparatus for cleaning of flue gas using fluidized bed with said bed consisting of some chemically active adsorbent material, e.g. charcoal said gas being produced in various industrial installations and containing particulate impurities, such as heavy metal aerosols; gaseous organic impurities, such as low-volatility organic compounds, polychlorinated dibenzodioxins (PCDD), polychlorinated dibenzofurans (PCDF); gaseous inorganic and acidifying impurities, e.g. HF, HCl, SO2, SO3, nitrogen oxides; and gaseous trace elements, such as heavy metals and compounds thereof (henceforth pollutants).

The present invention provides flue gas purification apparatus comprising at least two fluidized beds of particulate material separated by a wall into outer and inner beds, or a fluidized bed of particulate material separated in its lower portion into outer and inner sub-beds by a wall, said particulate material having adsorption, sorption and/or catalytic properties, means for introducing particulate material at the top of the bed or beds, and means for removing particulate material from the bottom of the bed or beds, means for introducing gas for purification into the lower portion of the apparatus and means for collecting purified gas from the upper portion of he apparatus, said gas for purification being introduced into said outer bed or sub-bed through downwardly directed louvers. According to the invention, means for passage of said gas from said outer bed or sub-bed to said inner bed or sub-bed are provided by downwardly directed louvers in said wall in the form of an inverted V-shape with a cut-off vertex.

The present invention also provides a method of purifying flue gas comprising introducing a flue gas into an apparatus as described above, said apparatus having particulate material passing downwards from said introducing means to said removing means, passing said gas through said outer bed or sub-bed, through said louvers in said wall, and into said inner bed or sub-bed, said gas passing upwards through said particulate material, and being collected through means.

The present invention will be more fully described with reference to the accompanying Drawings, in which

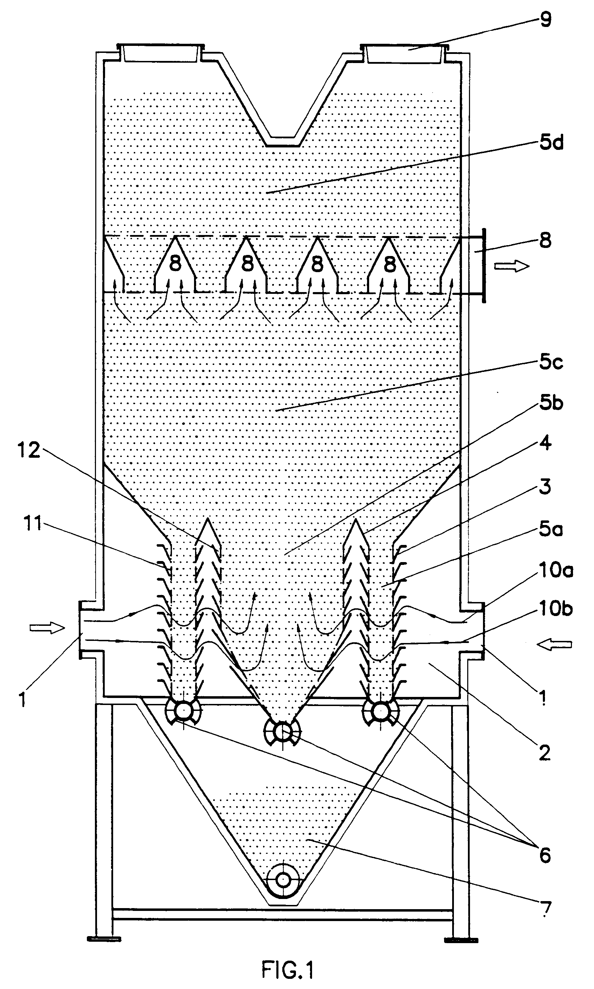

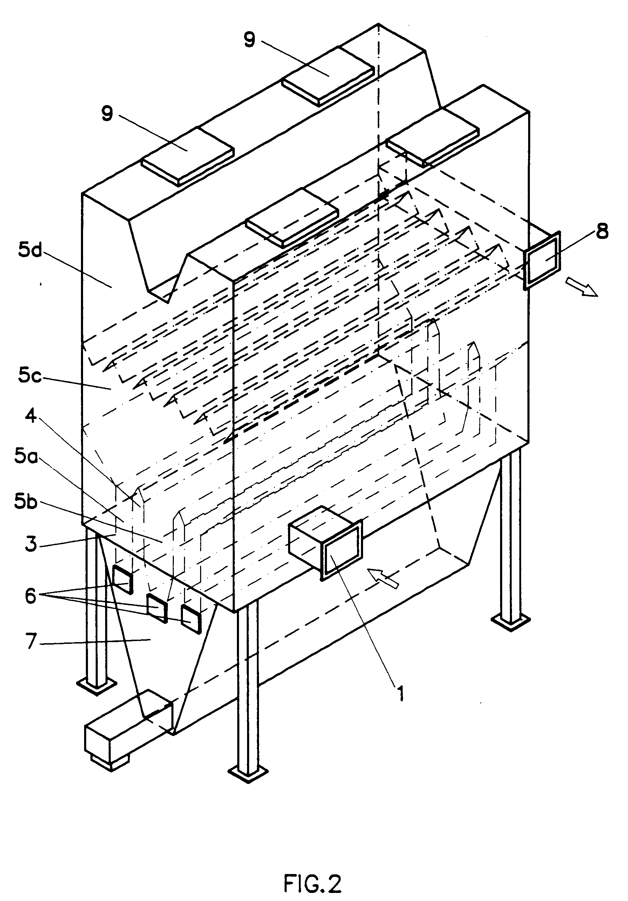

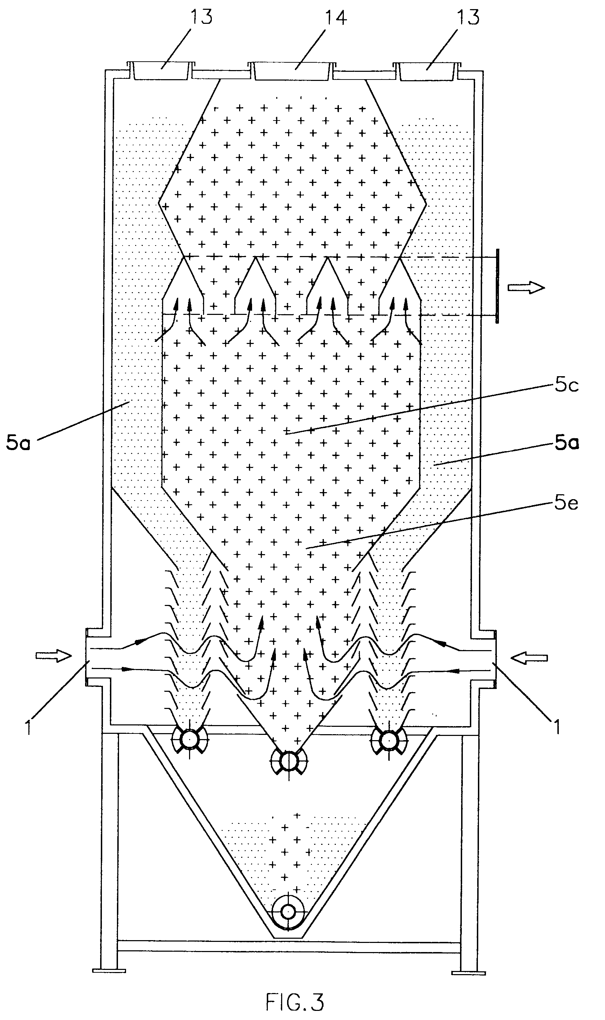

Figure 1 shows a crossection of preferred embodiment 1 of an "Flue gas purification apparatus", Figure 2 shows 3 D projection of said apparatus, and Figure 3 shows a crossection of preferred embodiment 2 of said apparatus. The reference numbers found in figures refer to:
- 1.: inlet for flue gases;
- 2.: pre-mixing chamber;
- 3.: inlet louvered wall;
- 4.: inverted V-shape louvered wall;
- 5a.: outer fluidized bed;
- 5b.: inner fluidized bed;
- 5c.: bulk fluidized bed;
- 5d.: upper fluidized bed;
- 5e.: inner fluidized bed consisting of different material than outer fluidized bed;
- 6.: worm gear assembly;
- 7.: lower fluidized bed;
- 8.: exit shaft;
- 9.: fluidized bed material inlet:
- 10a., 10b.: gas flowpath;
- 11.: imaginary wall obtained by connecting innermost points of louvers of outer fluidized bed;
- 12.: imaginary wall obtained by connecting innermost points of louvers of inner fluidized bed
- 13.: opening for outer fluidized bed material inlet;
- 14.: opening for inner fluidized bed material inlet.

Referring now to the Drawings, Embodiment 1 is shown in Figure 1. The flue gases (1) enter from the side and travel through the pre-mixing chamber (2) to enter the outer fluidized bed (5a) through downward oriented louvers forming the penetrated wall (3). If one imagines lines connecting the innermost points of louvers (11) such lines are almost vertical for most of their lengths differing +-5° from the vertical. This louvered wall changes the direction of flue gases in such a fashion that they are originally oriented downward. Within the outer fluidized bed (5a) the buoyancy changes the direction slightly upward. This direction is schematically depicted using assumed flowpaths (10a, 10b). In outer fluidized bed the gases are cleaned for the first time. After this phase the gases exit through another louvered wall with louvers (4) in form of inverted V shape some of which have cut-off vertices. These louvers change the direction of gas momentum from partially upward to partially downward to again achieve the advantage described in the Description of the invention. Then the gases enter the inner fluidized bed (5b) where they get through the second stage of cleaning process. If one connects the innermost points of louvers (thus defining the edge of innermost fluidized bed) such imaginary lines (12) depict the vessel which is rectangular at the top and then changes into downward narrowing funnel. During the process the gases turn upward due to buoyancy, pass through the bulk of the incoming fluidized bed (5c) in the countercurrent fashion achieving further purification and exit through exit shafts (8) at the top. The bed material is introduced through the openings at the top of the vessel (9). At the bottom of each fluidized bed there is a worm gear assembly (6) which controls the velocity of respective fluidized bed. The rotational velocities of worm gear assemblies are linked to the velocity of respective fluidized beds thus achieving desired results in terms of contact time and ratio of adjacent fluidized bed scrubbing efficiency.

Embodiment 2 is shown in figure 3. The difference between this embodiment and embodiment 1 is in use of plurality of materials for fluidized beds. First, the flue gases (1) pass through the louvered wall described in embodiment 1 into the outer fluidized bed (5a) consisting of some fluidized bed material. Then the gases pass through the downward V oriented louvers described in embodiment 1 into the inner fluidized bed (5b) consisting of some other fluidized bed material as the outer fluidized bed material. Apart from that embodiment 2 does not differ from embodiment 1.

Embodiment 3 is further extension of embodiments 1 and 2 in such a way that plurality of fluidized beds are added so that they form consecutive fluidized bed through which the gases should pas and thus achieving greater scrubbing efficiency within same apparatus. In this case the additional louvered walls are constructed appropriately.

The apparatus has the following characteristics:
- the apparatus uses the chemical principles of adsorption, sorption, and catalyst processes;
- the apparatus comprises of fluidized bed consisting of adsorbent medium/a and/or catalyst medium/a (henceforth medium); said medium contained within the metal housing of particular design; said medium consisting of particles of various shapes and sizes;
- the flue gas purified by said apparatus are in contact with adsorbent medium - the pollutants contained in these gas bind to the surface of the medium by adsorption, react chemically with elements contained within said medium; medium may also serve as catalyst to facilitate chemical reaction of gas components;
- the efficiency of said apparatus is influenced by type of medium and length of time during which the flue gas are in contact with particles forming said medium;
- the flue gas are introduced in mainly horizontal direction through louvered wall; initial momentum of said gas is directed downward;
- the flue gas first meander through the outer fluidized bed; said fluidized bed moving in general downward vertical direction between two adjacent walls consisting of louvers; the line which is obtained if the center points of the louvers in cross sectional view are connected is either vertical or almost vertical, digressing not more than 10° from the vertical position; the fluidized bed travels downward and the gas are driven upward by buoyancy and have to overcome first the momentum of downward travelling fluidized bed and their own downward oriented momentum introduced by passage through the louvers - because of these competing forces the gas in effect travel in general horizontal direction through said outer portion of the fluidized bed; during the travel dust particles (aerosols) contained in the gas are deposited on the medium particles and some of the pollutants either react with the medium, are adsorbed by the medium, or the reaction is facilitated with medium serving as catalyst;
- the outer fluidized bed moves significantly faster than the main, inner, fluidized bed; different velocities are obtained by using different worm gears for removing the medium at the bottom of said apparatus; the outer fluidized bed serves mainly for first contact with adsorbent medium and initially roughly cleans the incoming flue gas, hence desirable faster exchange of medium. Also, by increasing the velocity of the fluidized bed the gas makes longer paths meandering through the particles and does not clump with the medium particles; the pressure drop through said apparatus is therefore lower; the ratio of medium vs. flue gas is also lower due to increased contact time between gas and medium particles;
- the worm gears utilized control the velocity of the fluidized bed in particular section: the outer sections move with different velocity and this is controlled through different rotational speed of worm gears. Each set of gears can have its own velocity which is used to such flow path of gases meandering through the bed to attain desired purification results: exact velocities are determined either by calculation or by trial-and-error tests of the actual embodiment.
- the partially purified flue gas exits the outer fluidized bed and enters the inner fluidized bed through louvers, each louver having general inverted V shape with cut-off vertex and with narrower part pointing upward; this shape has two favorable effects - upon exiting from the outer fluidized bed the general direction is already turning upward due to buoyancy and gas does not have to alter the momentum direction prematurely, the second effect being that the fluidized bed slips over the louvers is not as prone to fouling as if the louvers would be shaped differently - upon entering into the inner fluidized bed the momentum is again directed downward which benefits the contact time of gas and medium, analogous to the effects within the outer fluidized bed, explained previously; the movement of the flue gases is shifted from generally downward to generally horizontal to finally generally upward in true countercurrent fashion which facilitates the adsorption of heavily soiled gases with already contaminated particles and already partially purified gases with cleaner medium; purified gas exits through the shafts inserted in the upper portion of the fluidized bed and connected to the main exit tube;
- the imaginary boundaries of inner fluidized bed obtained by connecting the innermost edges of the louvers are rectangular in the upper portion and in form of the downward narrowing funnel in the lower portion of said fluidized bed - this shape provides for sufficient mass flow of gas per unit of cross sectional area (see DE 40 40 246 for better description of mass flow);
- the inner and outer fluidized bed media may consist of different particle materials, e.g. the outer fluidized bed comprising of adsorption medium and inner of adsorption medium which also serves as a catalyst;
- the reagent is introduced to flue gases prior to entering the reactor, the reagent used to reduce nitrogen oxides into nitrogen by facilitating catalytic conversion within the fluidized bed of the reactor.
- the apparatus may consist of more than two adjacent fluidized beds if better efficiency or higher purity of flue gases is required, the adjacent fluidized beds separated by inverted V-form louvered walls.
- the apparatus may consist of several units which clean the gases sequentially, so called modular arrangement.

The apparatus as outlined above have significant advantages over existing state-of-the art comprising of:
- the mass of adsorbent medium per volume of flue gas can be lower due to faster velocity of the outer fluidized bed;
- there is less fouling as the speed of heavily contaminated medium forming the outer fluidized bed (which is more prone to fouling than less contaminated medium) is higher than less contaminated medium in the inner fluidized bed;
- there are several stages of cleaning achieved by first stripping the dust particles in the outer fluidized bed and then continuing with other processes outlined previously;
- by using different medium for outer and inner fluidized beds significant savings can be achieved if both media are tailored for its specific purpose: the outer medium leaning toward stripping of aerosols and first, rough, purification of the gas, and inner medium primarily suited for final gas purification.

## Claims

1. Flue gas purification apparatus comprising at least two fluidized beds [5a, 5b] of particulate material separated by a wall [4] into outer and inner beds, or a fluidized bed of particulate material separated in its lower portion into outer and inner sub-beds [5a, 5b] by a wall [4], said particulate material having adsorption, sorption and/or catalytic properties, means [9, 13, 14] for introducing particulate material at the top of the bed or beds, and means [6] for removing particulate material from the bottom of the bed or beds, means [1] for introducing gas for purification into the lower portion of the apparatus and means [8] for collecting purified gas from the upper portion of the apparatus, said gas for purification being introduced into said outer bed or sub-bed [5a] through downwardly directed louvers,
characterized in that means for passage of said gas from said outer bed or sub-bed [5a] to said inner bed or sub-bed [5b] are provided by downwardly directed louvers in said wall [4] in the form of an inverted V-shape with a cut-off vertex.

2. Flue gas purification apparatus according to Claim 1,
characterized in that said inner bed or sub-bed [5b] has a shape comprising an upper part in a rectangular form, and a lower part in a downward narrowing funnel form, said shape being defined by an imaginary line [12] connecting innermost edges of said louvers comprising said walls of said inner bed or sub-bed [5b].

3. Flue gas purification apparatus according to Claim 1 or 2,
characterized in that said outer bed or sub-bed [5a] has a shape comprising an essentially rectangular form defined by an imaginary line [11] connecting innermost edges of the louvers for introduction of gas into said outer section of said bed or sub-bed [5a], said imaginary line [11] being vertical and/or differing at most ± 5° from the vertical axis.

4. A method of purifying flue gas comprising introducing a flue gas into an apparatus according to any one of Claims 1 to 3, said apparatus having particulate material passing downwards from said introducing means [9, 13, 14] to said removing means [6], passing said gas through said outer bed or sub-bed [5a], through said louvers in said wall [4,], and into said inner bed or sub-bed [5b], said gas passing upwards through said particulate material, and being collected through means [8].

5. A method according to Claim 4,
characterized in that said particulate material passing downwards through said outer bed or sub-bed [5a] moves faster than said particulate material passing downwards through said bed or sub-bed [5a].

6. A method according to Claim 5,
characterized in that a difference in velocities of said particulate material passing through said fluidized beds or sub-beds is achieved by use of a worm gear or worm gear assembly [6] connected to each bed or sub-bed, said worm gear or worm gear assembly [6] defining the velocity of particulate material passing through it by virtue of its rotational speed.

7. A method according to any of Claims 4 to 6,
characterized in that a reagent is introduced into said flue gas prior to entering of said flue gas into said fluidized bed, said reagent being adapted for reduction of nitrogen oxides into nitrogen by facilitating catalytic conversion within said fluidized bed.

8. A method according to any of Claims 4 to 7,
characterized in that said particulate material comprising said beds or sub-beds differ in particle size and/or chemical composition.

## Patentansprüche

1. Vorrichtung zur Abgasreinigung, die mindestens zwei Wirbelschichtbetten (5a, 5b) aus partikelförmigem Material, die durch eine Wand (4) in äußere und innere Betten unterteilt sind, oder enthaltend ein Wirbelschichtbett aus partikelförmigem Material. das in seinem unteren Bereich durch eine Wand (4) in äußere und innere Bettabschnitte (5a, 5b) unterteilt sind, wobei das partikelförmige Material Adsorptions-, Sorptions- und/oder katalytische Eigenschaften hat, Einrichtungen (9, 13, 14) zum Zuführen von partikelförmigem Material an der Oberseite des Bettes oder der Betten, und Einrichtungen (6) zur Entnahme von partikelförmigem Material am Boden des Bettes oder der Betten, Einrichtungen (1) zum Einleiten von zu reinigendem Gas in den unteren Bereich der Vorrichtung und eine Einrichtung (8) zum Auffangen von gereinigtem Gas aus dem oberen Bereich der Vorrichtung aufweist, wobei dieses zu reinigende Gas in das äußere Bett bzw. den äußeren Bettabschnitt (5a) durch nach unten gerichtete Einlässe zugeführt wird, dadurch gekennzeichnet, daß Einrichtungen zum Durchlassen dieses Gases aus dem äußeren Bett oder dem äußeren Bettabschnitt (5a) in das innere Bett oder den inneren Bettabschnitt (5b) durch nach unten gerichtete Einlässe in dieser Wand (4) in Gestalt einer umgekehrten V-Form mit einem abgeschnittenen Scheitel vorgesehen sind.

2. Vorrichtung zur Abgasreinigung nach Anspruch 1, dadurch gekennzeichnet, daß dieses innere Bett oder dieser innere Bettabschnitt (5b) eine Gestalt aufweist, die einen oberen Abschnitt mit einer Rechteckform und einen unteren Abschnitt mit sich nach unten verjüngender Trichterform aufweist, und daß diese Form durch eine Imaginärlinie (12) definiert ist, die die inneren Ränder dieser Einlässe verbindet, welche diese Wände des inneren Bettes oder inneren Bettabschnittes (5b) umfassen.

3. Vorrichtung zur Abgasreinigung nach Anspruch 1 oder 2, dadurch gekennzeichnet, daß dieses äußere Bett oder dieser äußere Bettabschnitt (5a) eine Gestalt hat, die eine im wesentlichen rechteckige Form umfaßt, die durch eine Imaginärlinie (11) definiert ist, die die innersten Ränder der Einlässe zum Einleiten von Gas in diesen äußeren Bereich dieses Bettes oder Bettabschnittes (5a) miteinander verbinden, und daß diese Imaginärlinie (11) vertikal verläuft und/oder hochstens plus/minus 5° von der Vertikalachse abweicht.

4. Ein Verfahren zur Abgasreinigung, welches darin besteht, daß man ein Abgas in eine Vorrichtung gemäß einem der Ansprüche 1 bis 3 einleitet, wobei diese Vorrichtung partikelförmiges Material enthält, das sich von dieser Zuführeinrichtung (9, 13, 14) zu der Entnahmeeinrichtung (6) bewegt, und daß man dieses Gas durch dieses äußere Bett oder den äußeren Bettabschnitt (5a) durch diese Einlässe in dieser Wand (4) und in dieses innere Bett oder den inneren Bettabschnitt (5b) hindurchströmen läßt, wobei dieses Gas nach oben durch dieses partikelförmige Material strömt und durch die Einrichtung (8) abgezogen wird.

5. Ein Verfahren nach Anspruch 4, dadurch gekennzeichnet, daß dieses partikelförmige Material, welches sich nach unten durch dieses äußere Bett oder diesen äußeren Bettabschnitt (5a) bewegt, sich schneller bewegt als dieses partikelförmige Material, welches nach unten durch dieses Bett oder diesen Bettabschnitt (5b) fließt.

6. Ein Verfahren nach Anspruch 5, dadurch gekennzeichnet, daß man eine Differenz in den Geschwindigkeiten dieses partikelförmigen Materials, welches durch diese Wirbelschichtbetten oder diese Wirbelschichtbettabschnitte strömt, durch die Verwendung eines Schneckentriebes oder einer Schneckentriebanordnung (6) erzielt, das bzw. die jedem dieser Betten oder Bettabschnitte zugeordnet ist, und daß dieser Schneckentrieb oder diese Schneckentriebanordnung (6) die Geschwindigkeit des dadurch hindurchlaufenden Materials durch deren Rotationsgeschwindigkeit bestimmt.

7. Ein Verfahren nach einem der Ansprüche 4 bis 6, dadurch gekennzeichnet, daß man in dieses Abgas, bevor dieses Abgas in dieses Wirbelschichtbett eintritt, ein Reaktionsmittel einleitet, welches für die Reduktion von Stickstoffoxyden zu Stickstoff durch Unterstützung der katalytischen Umwandlung innerhalb dieses Wirbelschichtbettes geeignet ist.

8. Ein Verfahren nach einem der Ansprüche 4 bis 7, dadurch gekennzeichnet, daß dieses partikelförmige Material, welches in diesen Betten oder Bettabschnitten vorliegt, in der Partikelgröße und/oder der chemischen Zusammensetzung unterschiedlich ist.

## Revendications

1. Appareil de purification de gaz de carneau comprenant au moins deux lits fluidisés [5a, 5b] de matériau particulaire séparés par une cloison [4] en lit extérieur et lit intérieur, ou un lit fluidisé de matériau particulaire séparé dans la partie inférieure en lits secondaires extérieur et intérieur [5a, 5b] par une cloison [4], ce matériau particulaire possédant des caractéristiques d'adsorption, de sorption et/ou catalytiques, un dispositif [9, 13, 14] pour l'introduction du matériau particulaire à la partie supérieure du lit ou des lits, un dispositif [6] pour l'extraction du matériau particulaire de la partie inférieure du lit ou des lits, un dispositif [1] pour l'introduction de gaz pour purification dans la partie inférieure de l'appareil et un dispositif [8] pour le recueil de gaz purifié à la partie supérieure de l'appareil, ce gaz à purifier étant introduit dans ce lit extérieur ou lit secondaire extérieur [5a] par des volets dirigés vers le bas, caractérisés par le fait que le dispositif de passage de ce gaz du lit extérieur ou lit secondaire extérieur [5a] au lit intérieur ou lit secondaire intérieur [5b] est fourni par des volets dirigés vers le bas dans la cloison [4] sous forme de V inverti, le sommet étant coupé.

2. Appareil de purification de gaz de carneau selon la Revendication 1, caractérisé par le fait que le lit intérieur ou le lit secondaire intérieur [5b] comprend une partie supérieure de forme rectangulaire et une partie inférieure en forme d'entonnoir se rétrécissant vers le bas, cette forme étant définie par une ligne imaginaire [12] raccordant les bords intérieurs des volets comprenant les cloisons du lit intérieur ou lit secondaire intérieur [5b].

3. Appareil de purification de gaz de carneau selon la Revendication 1 ou 2, caractérisé par le fait que le lit extérieur ou le lit secondaire extérieur [5a] comprend une forme essentiellement rectangulaire définie par une ligne imaginaire [11] raccordant les bords intérieurs des volets pour l'introduction de gaz dans la partie extérieure du lit ou lit secondaire [5a], cette ligne imaginaire [11] étant verticale et/ou s'écartant au maximum de ± 5° de l'axe vertical.

4. Une méthode de purification du gaz de carneau comprenant l'introduction de gaz de carneau dans un appareil selon l'une quelconque des Revendications 1 à 3, cet appareil ayant un matériau particulaire se déplaçant vers le bas du dispositif d'introduction [9, 13, 14] au dispositif d'extraction [6], faisant passer le gaz par le lit extérieur ou lit secondaire extérieur [5a] par les volets dans la cloison [4] et dans le lit intérieur ou lit secondaire intérieur [5b], le gaz se déplaçant vers le haut au travers du matériau particulaire et étant recueilli par le dispositif [8].

5. Une méthode selon la Revendication 4, caractérisée par le fait que le matériau particulaire descendant au travers du lit extérieur ou lit secondaire extérieur [5a] se déplace plus rapidement que le matériau particulaire descendant au travers du lit ou lit secondaire [5b].

6. Une méthode selon la Revendication 5, caractérisée par le fait qu'une différence de vitesse du matériau particulaire traversant les lits fluidisés ou lits secondaires fluidisés est obtenue par l'emploi d'un engrenage à vis sans fin ou assemblage d'engrenage à vis sans fin [6] raccordé à chaque lit ou lit secondaire, cet engrenage à vis sans fin ou assemblage d'engrenage à vis sans fin [6] déterminant la vitesse du matériau particulaire qui le traverse par sa vitesse de rotation.

7. Une méthode selon l'une quelconque des Revendications 4 à 6, caractérisée par le fait qu'un réagent est introduit dans le gaz de carneau avant son entrée dans le lit fluidisé, ce réagent étant adapté pour la réduction des oxydes d'azote en azote par la facilitation de la conversion catalytique dans le lit fluidisé.

8. Une méthode selon l'une quelconque des Revendications 4 à 7, caractérisée par le fait que la dimension des particules et/ou la composition chimique du matériau particulaire des lits ou lits secondaires sont différentes.
